# EUROPEAN PATENT SPECIFICATION

(11) **EP 1 066 455 B1**
(45) Date of publication and mention of the grant of the patent: **05.06.2002**
(21) Application number: 99914868.7
(22) Date of filing: 26.03.1999
(51) Int. Cl.: F01N 3/24, B01D 27/08

(54) **EXHAUST GAS FILTER TEMPORARILY ARRANGED AT A VEHICLE EXHAUST PIPE**
ABGASFILTER, DER ZEITWEISE AM FAHRZEUG BEFESTIGT IST
FILTRE POUR GAZ D'ECHAPPEMENT INSTALLE TEMPORAIREMENT SUR LE TUYAU D'ECHAPPEMENT D'UN VEHICULE

(30) Priority: 27.03.1998 SE 9801079
(43) Date of publication of application: 10.01.2001
(73) Proprietor: Scandfilter AB, 512 85 Svenljunga (SE)
(72) Inventor: OHLANDER, Roland, S-510 40 Sandared (SE); LINDQVIST, Martin, S-512 60 Överlida (SE)
(74) Representative: Lindberg, Klas Valter Bo
(86) International application number: SE9900500
(87) International publication number: WO9949191

(56) References cited:
- WO-A1-86/03802
- FR-A- 2 580 030
- GB-A- 2 030 221

## Description

### Field of the Invention

The present invention relates to a device for cleaning exhaust gases from vehicles, especially cars, which is intended to be temporarily arranged adjacent to the exhaust pipe of the vehicle, comprising a filter unit with a first part for separation of particles and a second part for separation of gaseous pollutants, such as hydrocarbons, the filter unit also comprising a filter housing, in which the first and second parts are arranged. This exhaust gas cleaning device is preferably intended to be used as a temporary filter for separating particulate and gaseous pollutants from vehicles when they are transported from vehicle manufacturing plants or when they are driven indoors, for example in car show-rooms and workshops.

### Background of the Invention

Presently, in order to avoid exhaust gases in, for example, a car showroom use is made of exhaust gas cleaning devices which are temporarily arranged on the exhaust pipe of the cars. These devices usually have a particle filter for separating particulate pollutants as well as a carbon filter for removing gaseous pollutants : see for example WO 86 038 02 A. Since new engines contain a large amount of hydrocarbons, the carbon filters of the exhaust gas cleaning devices have a short life and, consequently, the devices can only be reused a small number of times.

One problem associated with this technology is thus that a large number of polluted exhaust gas cleaning devices are produced, which because of their carcinogenic contents of polycyclic aromatic hydrocarbons are designated as hazardous waste and which, accordingly, cannot be deposited at an ordinary municipal refuse tip.

Another problem associated with the carbon filters of prior art exhaust gas cleaning devices is that the degree of separation of the gaseous pollutants is low.

### Summary of the Invention

The object of the present invention is to solve the problems described above by simplifying the disposal of the exhaust gas cleaning devices after use as well as increasing the degree of separation of the gaseous pollutants.

This object is achieved according to the invention by a device of the type described in the introductory paragraph, characterised in that the filter unit is made of a material which is completely destructible by means of incineration and that the second part comprises a body, containing immobilised activated carbon evenly distributed in the body.

Since the filter unit of the device is composed of a material which is completely destructible by means of incineration, the entire filter unit can be incinerated in a conventional refuse incinerator, whereby the material including the harmful hydrocarbons is decomposed into innocuous, gaseous residual products.

That fact that said body contains evenly distributed activated carbon results in better utilisation of the activated carbon. Moreover, since the activated carbon is immobilised, high and safe gas filtering is achieved with no risk of gas leakage due to settlements in the carbon body. In other words, compaction of carbon particles is prevented during operation. Compaction of the carbon particles is undesirable since it would result in the formation in the carbon body of areas without carbon particles and consequently without the ability to separate gaseous pollutants, i.e. the gaseous pollutants would not be removed from the part of the exhaust gases which would flow through these areas. The total degree of separation would thus be relatively low.

The filter unit of the device preferably comprises a filter housing, in which the first and second parts can be arranged.

The filter housing is made of a material which is completely destructible by means of incineration. The filter housing can be made of cardboard or of a combustible polymer, such as a recovered polymer or polypropylene. The filter housing is suitably made in the shape of a tube or a sleeve.

Said body preferably comprises an activated carbon combined with a carrier material and the activated carbon is suitably cross-linked with a polymer.

Said first part preferably comprises a microfilter, such as a HEPA filter.

The first and second parts are suitably attached to the filter housing by means of gluing.

The device preferably comprises a fastening member for attaching the filter unit to the exhaust gas system of the car by means of an adapter.

The fastening member can be made of a material which is completely destructible by means of incineration, such as a combustible polymer. The polymer may consist of a recovered polymer or polypropylene.

### Brief Description of the Drawings

The invention will be described in more detail below with reference to the accompanying schematic drawing, which by way of example shows a part section of a presently preferred embodiment of the device according to the invention.

### Description of a Preferred Embodiment

The device according to the preferred embodiment comprises a filter unit 1 with a first part 2 for separation of particles present in exhaust gases from a vehicle, such as a car, (not shown) as well as a second part 3 for separation of gaseous pollutants present in these exhaust gases, such as polycyclic aromatic hydrocarbons. The first part comprises a microfilter 2, such as a HEPA filter, in the form of a pleated filter sheet made of a fibre material, such as polyester. The second part, however, comprises a carbon body 3 containing immobilised activated carbon evenly distributed in the body. The activated carbon is cross-linked with a polymer in order to form of a homogeneous, self-supporting round of activated carbon.

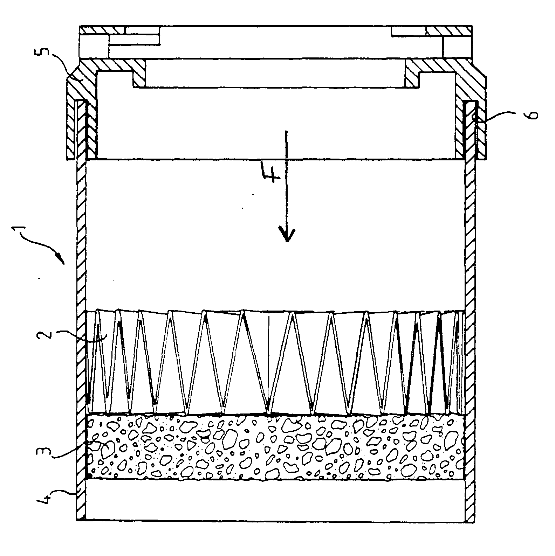

Furthermore, the filter unit comprises a filter housing 4 in the form of a cardboard tube, in which the microfilter 2 and the carbon body 3 are arranged. More specifically, the microfilter and the carbon body are bonded to the inside of the cardboard tube by means of hot melt adhesive in such a way that they abut against each other and, moreover, from the point of view of the flow direction of the exhaust gases, indicated by the flow arrow F in the drawing, the carbon body is located downstream of the microfilter. On the side which does not abut against the microfilter, the carbon body is located a short distance upstream of the downstream end of the cardboard tube. Furthermore, the inside of the cardboard tube is coated with a layer of, for example, silicate paint in order to enable the hot exhaust gases to flow through the cardboard tube without destroying it while at the same time ensuring that the tube is destructible by means of conventional waste incineration.

The device also comprises a fastening member 5, which is provided with a surrounding track 6 at its downstream end, in which track the downstream end of the cardboard tube 4 is attached by means of a hot melt adhesive. At its upstream end, the fastening member is attached to the exhaust pipe of a vehicle by the intermediary of a conventional adapter (not shown), the fastening member being attached to the adapter by means of, for example, a bayonet catch. The fastening member is made of a material which is completely destructible by means of incineration, such as polypropylene or a recovered polymer consisting of a mixture of conventional recovered plastics, such as HDPE, LDPE, PP, etc.

In use, the exhaust gas cleaning device is thus arranged adjacent to the exhaust pipe of the vehicle and exhaust gases flow through it when the vehicle is being driven in, for example, a car showroom. When the exhaust gases first pass through the microfilter 2 of the filter unit 1, their particulate pollutants, such as soot particles, are separated first. Subsequently, their gaseous pollutants, such as polycyclic aromatic hydrocarbons, are separated from the exhaust gases in the carbon body 3 of the filter unit 1. Since the activated carbon particles of the carbon body are evenly distributed in the entire body and since they are also locked in position, compaction of the same is avoided, whereby it is ensured that the entire exhaust gas flow must pass through the adsorbing carbon particles. In this way, high separation of gaseous pollutants is achieved.

Subsequently, when the vehicle is to be delivered to the buyer in question, the exhaust gas cleaning device is removed together with the adapter from the exhaust pipe of the vehicle and is reused on another vehicle. Since there is a large amount of hydrocarbons in new engines the exhaust gas cleaning device can only be reused a few times if it is mostly used in connection with new vehicles. When the exhaust gas cleaning device is considered worn out it is removed from the adapter and destroyed by means of incineration, which is possible since the entire exhaust gas cleaning device is made of combustible materials.

It will be appreciated that a number of modifications of the embodiment described above are possible within the scope of the invention as defined by the appended claims. For example, the microfilter 2 and the carbon body 3 can be mounted inside the filter housing 4 by means of a conventional rubber seal. Furthermore, the filter housing 4 can be in the shape of a sleeve, which can be made of a combustible polymer, such as polypropylene or a recovered polymer. Moreover, the filter housing and the fastening member can be made in one piece and, in that case, are suitably made of a polymer. It is also possible to design the exhaust gas cleaning device according to the present invention in such a way that only the microfilter 2 and the carbon body 3 are replaced when the degree of separation of particles and/or gaseous pollutants is below predetermined limit values, i.e. the filter housing and the fastening member are provided with a new microfilter and a new carbon filter. In the latter variant, the filter unit which is completely destructible by means of incineration only comprises the microfilter and the carbon body. It is also possible to provide the exhaust gas cleaning device with a transportation safety device in the form of a plastic cover, which is placed inside the filter housing 4 downstream of the carbon body 3 prior to using the exhaust gas cleaning device.

## Claims

1. A device for cleaning exhaust gases from vehicles, especially cars, adapted to be temporarily arranged adjacent to the exhaust pipe of the vehicles and comprising a filter unit (1) with a first part (2) for separation of particulate pollutants and a second part (3) for separation of gaseous pollutants, such as hydrocarbons, the filter unit also comprising a filter housing (4), in which the first (2) and second (3) parts are arranged, **characterised in that** the filter unit (1) is made of a material which is completely destructible by means of incineration, and the second part (3) comprises a body containing immobilised activated carbon evenly distributed in the body.

2. A device according to claim 1, **characterised in that** the filter housing (4) is made of board.

3. A device according to claim 1, **characterised in that** the filter housing (4) is made of a combustible polymer.

4. A device according to claim 3, **characterised in that** the filter housing (4) is made of a recovered polymer or polypropylene.

5. A device according to any one of claims 2-4 **characterised in that** the filter housing is made in the shape of a tube (4) or sleeve.

6. A device according to any one of the preceding claims, **characterised in that** said body (3) comprises activated carbon combined with a carrier material.

7. A device according to claim 6, **characterised in that** the activated carbon is cross-linked with a polymer.

8. A device according to any one of the preceding claims, **characterised in that** said first part comprises a microfilter (2), such as a HEPA filter.

9. A device according to any one of claims 2-8, **characterised in that** the first (2) and the second (3) parts are attached to the filter housing (4) by means of gluing.

10. A device according to any one of the preceding claims, **characterised by** a fastening member (5) for attaching the filter unit (1) to the exhaust gas system of the vehicle in question by means of an adapter.

11. A device according to claim 10, **characterised in that** the fastening member (5) is made of a material which is completely destructible by means of incineration.

12. A device according to claim 11, **characterised in that** the fastening member (5) is made of a combustible polymer.

13. A device according to claim 12, **characterised in that** the polymer consists of a recovered polymer.

14. A device according to claim 12, **characterised in that** the polymer consists of polypropylene.

## Patentansprüche

1. Vorrichtung zur Reinigung von Abgasen aus Fahrzeugen und insbesondere aus Automobilen, die so angepasst ist, dass sie zeitweise neben dem Auspuffrohr der Fahrzeuge angeordnet werden kann, und eine Filtereinheit (1) umfasst mit einem ersten Teil (2) zur Abscheidung von festen Schadstoffen und einem zweiten Teil (3) zur Abscheidung von gasförmigen Schadstoffen wie beispielsweise Kohlenwasserstoffen, wobei die Filtereinheit ebenfalls ein Filtergehäuse (4) umfasst, in dem der erste (2) und der zweite (3) Teil angeordnet sind,
**dadurch gekennzeichnet, dass** die Filtereinheit (1) aus einem Material hergestellt ist, welches mittels Verbrennung vollständig zersetzbar ist, und der zweite Teil (3) einen Körper umfaest, der immobilisierte Aktivkohle enthält, die gleichmäßig in dem Körper verteilt ist.

2. Vorrichtung nach Anspruch 1, **dadurch gekennzeichnet, dass** das Filtergehäuse (4) aus Karton hergestellt ist.

3. Vorrichtung nach Anspruch 1, **dadurch gekennzeichnet, dass** das Filtergehäuse (4) aus einem verbrennbaren Polymer hergestellt ist.

4. Vorrichtung nach Anspruch 3, **dadurch gekennzeichnet, dass** das Filtergehäuse (4) aus einem regenerierten Polymer oder Polypropylen hergestellt ist.

5. Vorrichtung nach einem der Ansprüche 2 - 4, **dadurch gekennzeichnet, dass** das Filtergehäuse in der Form eines Rohrs (4) oder einer Manschette hergestellt ist.

6. Vorrichtung nach einem der vorhergehenden Ansprüche, **dadurch gekennzeichnet, dass** der Körper (3) Aktivkohle kombiniert mit einem Trägermaterial umfasst.

7. Vorrichtung nach Anspruch 6, **dadurch gekennzeichnet**, daes die Aktivkohle mit einem Polymer vernetzt ist.

8. Vorrichtung nach einem der vorhergehenden Ansprüche, **dadurch gekennzeichnet, dass** der besagte erste Teil einen Mikrofilter (2), wie beispielsweise einen HEPA-Filter (Schwebstofffilter), umfasst.

9. Vorrichtung nach einem der Ansprüche 2-8, **dadurch gekennzeichnet, dass** der erste (2) und der zweite (3) Teil durch Verleimen an dem Filtergehäuse (4) befestigt sind.

10. Vorrichtung nach einem der vorhergehenden Ansprüche, **gekennzeichnet durch** ein Befestigungselement (5) zur Anbringung der Filtereinheit (1) an dem Auspuffsystem des betreffenden Fahrzeuge mit Hilfe eines Verbindungsstücks.

11. Vorrichtung nach Anspruch 10, **dadurch gekennzeichnet, dass** das Befestigungselement (5) aus einem, Material hergestellt ist, das mittels Verbrennung vollständig zersetzbar ist.

12. Vorrichtung nach Anspruch 11, **dadurch gekennzeichnet, dass** das Befestigungselement (5) aus einem verbrennbaren Polymer hergestellt ist.

13. Vorrichtung nach Anspruch 12, **dadurch gekennzeichnet, dass** das Polymer aus einem regenerierten Polymer besteht.

14. Vorrichtung nach Anspruch 12, **dadurch gekennzeichnet, dass** das Polymer aus Polypropylen besteht.

## Revendications

1. Dispositif pour la purification des gaz d'échappement dégagés par des véhicules, en particulier des véhicules automobiles, conçu pour être monté de manière temporaire en position adjacente au tuyau d'échappement des véhicules et comprenant une unité de filtre (1) comprenant une première partie (2) pour la séparation des polluants particulaires et une deuxième partie (3) pour la séparation des polluants gazeux tels que des hydrocarbures, l'unité de filtre comprenant également un logement de filtre 4 dans lequel sont arrangées les première et deuxième parties, **caractérisé en ce que** l'unité de filtre (1) est réalisé en une matière qui est complètement destructible par incinération et la deuxième partie (3) comprend un corps contenant du charbon activé immobilisé qui est distribué de manière uniforme dans le corps.

2. Dispositif selon la revendication 1, **caractérisé en ce que** le logement de filtre (4) est canstitué de carton.

3. Dispositif selon la revendication 1, **caractérisé en ce que** le logement de filtre (4) est réalisé en un polymère combustible.

4. Dispositif selon la revendication 3, **caractérisé en ce que** le logement de filtre 4 est réalisé à l'aide d'un polymère recouvert ou de polypropylène.

5. Dispositif selon l'une quelconque des revendications 2 à 4, **caractérisé en ce que** le logement de filtre est réalisé sous la forme d'un tube (4) ou d'un manchon.

6. Dispositif selon l'une quelconque des revendications précédentes, **caractérisé en ce que** ledit corps (3) comprend du charbon activé en combinaison avec une matière de support.

7. Dispositif selon la revendication 6, **caractérisé en ce que** le charbon activé est réticulé avec un polymère.

8. Dispositif selon l'une quelconque des revendications précédentes, **caractérisé en ce que** ladite première partie comprend un microfiltre (2) tel qu'un filtre HEPA.

9. Dispositif selon l'une quelconque des revendications 2 à 8, **caractérisé en ce que** la première partie (2) et la deuxième partie (3) sont fixées au logement de filtre (4) par collage.

10. Dispositif selon l'une quelconque des revendications précédentes, **caractérisé par** un élément de fixation (5) pour fixer l'unité de filtre (1) au système de gaz d'échappement du véhicule en question à l'aide d'un adaptateur.

11. Dispositif selon la revendication 10, **caractérisé en ce que** l'élément de fixation (5) est réalisé en une matière qui est complètement destructible par incinération.

12. Dispositif selon la revendication 11, **caractérisé en ce que** l'élément de fixation (5) est réalisé en un polymère combustible.

13. Dispositif selon la revendication 12, **caractérisé en ce que** le polymère est constitué d'un polymère recouvert.

14. Dispositif selon la revendication 12, **caractérisé en ce que** le polymère est constitué de polypropylène.
